# EUROPÄISCHE PATENTSCHRIFT

(11) **EP 3 191 357 B1**
(45) Veröffentlichungstag und Bekanntmachung des Hinweises auf die Patenterteilung: **10.10.2018**
(21) Anmeldenummer: 15750247.7
(22) Anmeldetag: 06.08.2015
(51) Int. Cl.: B61B 3/02, H02H 3/00, G05D 1/00

(54) **FÖRDERANLAGE MIT SICHERHEITSFUNKTION**
CONVEYOR FACILITY COMPRISING A SAFETY FUNCTION
CONVOYEUR AVEC FONCTION DE SÉCURITÉ

(30) Priorität: 10.09.2014 DE 102014013500
(43) Veröffentlichungstag der Anmeldung: 19.07.2017
(73) Patentinhaber: Eisenmann SE, 71032 Böblingen (DE)
(72) Erfinder: ZÖLLER, Joachim, 71254 Ditzingen (DE); NIEBEL, Bernd, 72135 Dettenhausen (DE)
(74) Vertreter: Ostertag & Partner Patentanwälte mbB
(86) Internationale Anmeldenummer: PCT/EP2015/001624
(87) Internationale Veröffentlichungsnummer: WO 2016/037673

(56) Entgegenhaltungen:
- EP-A1- 2 319 742
- DE-A1-102010 056 521
- JP-A- H10 111 716
- US-A- 5 503 260

## Beschreibung

### HINTERGRUND DER ERFINDUNG

### 1. Gebiet der Erfindung

Die Erfindung betrifft eine Förderanlage.

### 2. Beschreibung des Standes der Technik

Ein Beispiel für eine derartige Förderanlage ist eine Elektrohängebahn, bei welcher an einem entlang des Förderweges verlaufenden Träger meist eine Vielzahl Fahreinheiten hängen, die jeweils über einen eigenen Antrieb verfügen, um sich eigenständig fortzubewegen. Die Fahreinheiten werden dabei mit Hilfe einer entlang des Förderweges verlaufenden Stromschiene, an der Schleifkontakte der Fahreinheiten angreifen, mit der für die Fortbewegung notwendigen Energie versorgt. Eine solche Elektrohängebahn wird daher oft auch als stromschienengespeiste Förderanlage bezeichnet.

Die meisten derartigen Förderanlagen werden in gemischten Arbeitsumgebungen betrieben, in welchen sich sowohl teil- oder vollautomatisierte Fahreinheiten als auch Menschen bewegen. Um die Menschen vor Verletzungen insbesondere durch Bewegungen der Fahreinheiten zu schützen, umfassen die Förderanlagen Sicherheitseinrichtungen, die verschiedene Sicherheitsfunktionen bereitstellen.

An die Zuverlässigkeit einer solchen Sicherheitseinrichtung bestehen erhöhte Anforderungen. Diese Anforderungen werden beispielsweise über die Norm DIN EN ISO 13849 definiert. Insbesondere muss nach dieser Norm durch die Gesamtgestaltung einer Sicherheitsfunktion, wie beispielsweise der Möglichkeit einen Nothalt der Fahreinheiten auszulösen, gewährleistet sein, dass nicht ein einzelner Fehler in einem der für die Sicherheitsfunktion relevanten Teile dazu führt, dass diese nicht ordnungsgemäß ausgeführt wird. Ferner sollte die Sicherheitsfunktion so ausgelegt sein, dass ein aufgetretener Fehler zumindest vor einer erneuten Anforderung der Sicherheitsfunktion erkannt wird.

Zu diesem Zweck weisen die Stromschienen bisher bekannter Förderanlagen zwei Sicherheitsschleifleitungen auf, über welche redundant eine Sicherheitsfunktion, wie beispielsweise ein Nothalt, realisiert wird.

Da in den Förderanlagen der für die Stromschiene vorhandene Bauraum jedoch begrenzt ist, wäre es vorteilhaft die Anzahl der Schleifleitungen zu reduzieren. Insbesondere könnte dadurch freigewordener Bauraum beispielsweise für die Anbringung eines Positionscodes verwendet werden. Vergleiche hierzu die DE 10 2010 056 521 A1 der Anmelderin. Zudem würde sich der Kostenaufwand für eine solche Stromschiene verringern.

Eine Förderanlage mit einer entlang eines Förderweges verfahrbaren Fahreinheit und angeordneten Stromschienen, ist aus der US-A1-5 503 260 bekannt.

### ZUSAMMENFASSUNG DER ERFINDUNG

Es ist daher Aufgabe der vorliegenden Erfindung, eine Förderanlage anzugeben, bei welcher eine Sicherheitsfunktion mit weniger Sicherheitsschleifleitungen realisiert ist.

Erfindungsgemäß wird dies durch eine Förderanlage gemäß Anspruch 1 gelöst.

Die Erfinder haben erkannt, dass anstatt zweier zeitgleich geschalteter Sicherheitsschleifleitungen eine fehlertolerante Sicherheitsfunktion im Sinne der oben genannten Norm auch dadurch erreicht werden kann, dass die Sicherheitseinrichtung nur eine Sicherheitsschleifleitung verwendet, aber im Fehlerfall zusätzlich die Versorgungsschleifleitung spannungsfrei geschaltet wird, über welche der mitgeführte Verbraucher versorgt wird.

Grundsätzlich kann der Erfindungsgedanke, eine parallele Redundanz einer Sicherheitseinrichtung in eine zeitlich aufeinanderfolgende Redundanz zu überführen, dazu verwendet werden, generell die Anzahl von Sicherheitsschleifleitungen zu reduzieren. Besonders bevorzugt wird jedoch die Verwendung nur einer anstatt zweier Sicherheitsschleifleitungen sein, da die Norm nur eine Toleranz gegenüber einem Fehler vorsieht.

Unter dem elektrischen Verbraucher sind vor allem solche Einrichtungen zu verstehen, von welchen direkt oder indirekt ein Gefährdungspotential für Menschen ausgeht. So kann dies beispielsweise eine Schweißelektrode an einem schienengeführten Schweißroboter oder eine selbsteinfallende Bremse an einer Hubstation sein. Unter einem elektrischen Verbraucher kann jedoch auch ein steuerbarer Schalter, wie ein Relais oder ein Schütz, oder ein elektrisch steuerbares Ventil und dergleichen verstanden werden. Diese könnten wiederum beispielsweise Pneumatik- oder Hydraulikaktuatoren eines von der Fahreinheit mitgeführten Hubtisches oder dergleichen betätigen.

Vorzugsweise ist der elektrische Verbraucher jedoch ein elektrischer Antrieb, mit dessen Hilfe die Fahreinheit entlang des Förderweges verfahrbar ist und/oder mit dessen Hilfe andere Bewegungen realisiert werden. Mit einem solchen elektrischen Antrieb sind die einzelnen Fahreinheiten individuell und unabhängig voneinander durch die Förderanlage bewegbar und dennoch können die Fahreinheiten über die erfindungsgemäße Sicherheitseinrichtung zuverlässig in einen Zustand versetzt werden, in welchem sie keine Menschen gefährdende Eigenbewegungen mehr vollführen.

Bevorzugt umfasst das Überwachungsmittel mindestens eine außerhalb der Fahreinheit stationär angeordnete Überwachungsschaltung. Eine solche Überwachungsschaltung kann beispielsweise ein steuerbarer Schalter, wie beispielsweise ein Schütz oder ein Relais, sein, dessen Steuereingang mit der Sicherheitsschleifleitung verbunden ist.

Derartige stationär angeordnete Überwachungsschaltungen können mehrfach entlang des Fahrweges angeordnet sein, wodurch hinsichtlich der Überwachung des Spannungszustandes der Sicherheitsschleifleitung eine Redundanz realisiert wird. Vorzugsweise wird die stationär angeordnete Überwachungsschaltung analog zur von der Fahreinheit mitgeführten Überwachungsschaltung aufgebaut sein. Insbesondere kann derselbe Typ von steuerbarem Schalter verwendet werden wie in der Fahreinheit, sodass die mitgeführte und die stationäre angeordnete Überwachungsschaltung dasselbe Ansprechverhalten zeigen.

Das Überwachungsmittel kann jedoch auch eine von der Fahreinheit mitgeführte Meldeschaltung umfassen, die zumindest indirekt meldet, wenn an der Sicherheitsschleifleitung keine Spannung mehr anliegt, wodurch, wenn die erste Schaltung die Sicherheitsschleifleitung hätte spannungsfrei schalten sollen, am Ausbleiben einer Meldung erkannt wird, dass die Sicherheitsschleifleitung nicht spannungsfrei ist. Die Meldung von den einzelnen Fahreinheiten kann dabei über einen ohnehin vorhandenen Steuerkanal, beispielsweise über eine Steuerschleifleitung, an eine Zentralsteuerung übermittelt werden, welche Teile der Sicherheitseinrichtung beinhaltet oder mit diesen zusammenwirkt.

Ferner kann die erste Sicherheitsschaltung zwei ausgangsseitig in Reihe geschaltete, steuerbare Schalter, insbesondere Schütze, umfassen, welche im Normalbetrieb die Sicherheitsschleifleitung mit der mindestens einen Versorgungsschleifleitung verbinden. Die Reihenschaltung gewährleistet eine Fehlertoleranz hinsichtlich der steuerbaren Schalter, sodass die Sicherheitsfunktion auch zuverlässig ausgeführt wird, wenn einer der Schalter beispielsweise aufgrund eines verklemmten Schaltankers nicht abfällt. Um eine fehlerhafte Funktion eines Schalters zu erkennen, werden Überwachungsausgänge der Schalter überwacht. Dazu können die Überwachungsausgänge mit anderen Teilen der Sicherheitseinrichtung, beispielsweise mit einer Steuerung, verbunden sein.

Bevorzugt umfasst die zweite Sicherheitsschaltung zwei ausgangsseitig in Reihe geschaltete, steuerbare Schalter, insbesondere Schütze, welche im Normalbetrieb die mindestens eine Versorgungsschleifleitung mit einer Stromversorgung verbinden. Auch hier wird durch die Verwendung zweier Schalter eine höhere Fehlertoleranz erreicht.

Die Stopp-Einrichtung der Fahreinheit kann zwei ausgangsseitig in Reihe geschaltete, steuerbare Schalter, insbesondere Schütze, umfassen, welche im Normalbetrieb einen Sperreingang der Fahreinheit schließen. Ein solcher Sperreingang ist beispielsweise der sogenannte Safe-Torque-Off-Eingang eines Frequenzumrichters des elektrischen Antriebs. Unter einem solchen Sperreingang kann man jedoch auch einen einfachen Motorschütz verstehen, mit welchem ein Elektromotor von seiner Spannungsversorgung getrennt wird.

Vorzugsweise arbeitet der elektrische Verbraucher, insbesondere der elektrische Antrieb, mit einem 3-Phasen-Drehstrom, sodass die Stromschiene drei Versorgungsschleifleitungen umfasst, welche die drei Phasen des Drehstroms führen. Die Sicherheitsschleifleitung ist dann im Normalbetrieb gegenüber zumindest einer der Versorgungsschleifleitungen spannungsführend.

Die Sicherheitseinrichtung umfasst ferner einen Auslöseschalter, über welchen der Bedarfsfall für die Sicherheitsfunktion aktiviert wird. Dies kann insbesondere durch einen Bediener geschehen, der einen zur Sicherheitsfunktion gehörigen Nothalt-Schalter betätigt. Andere Auslöseschalter wären beispielsweise Sicherheitstüren, Trittschutzmatten oder Sicherheitslichtschranken, mit welchen ein Sicherheitsbereich der Förderanlage überwacht wird. Die Sicherheitsfunktion kann aber auch von einer übergeordneten Steuerung aktiviert werden, um den sicheren Stillstand der Anlage beispielsweise bei einer Wartung zu gewährleisten.

Die Sicherheitseinrichtung über welche eine Sicherheitsfunktion, wie beispielsweise ein Nothalt, der Förderanlage realisiert ist, wird vorzugsweise insgesamt über eine fehlersichere speicherprogrammierbare Steuerung (SPS) realisiert sein. Dementsprechend finden sich zumindest Teile der Sicherheitseinrichtung in der fehlersicheren speicherprogrammierbaren Steuerung. Insbesondere finden sich Teile der ersten und der zweiten Schaltung in der SPS.

Zudem lassen sich mit Hilfe einer SPS auf einfache Weise Rückmeldungen von den einzelnen, steuerbaren Schaltern der einzelnen Schaltungen überwachen, sodass beispielsweise ein fehlerhaft arbeitender Schalter erkannt werden kann. Grundsätzlich ist der Erfindungsgedanke jedoch auch über direkte Verschaltungen der einzelnen Komponenten ohne eine SPS realisierbar.

Schließlich kann die Sicherheitsschleifleitung entlang des Förderweges in Abschnitte unterteilt sein, die kleiner sind als Abschnitte der Versorgungsschleifleitung. Auf diese Weise lassen sich auf kleinere Bereiche beschränkte Nothalte umsetzen, ohne dass die gesamte Förderanlage gestoppt werden müsste.

Nachstehend wird die Erfindung anhand eines Ausführungsbeispiels unter Bezugnahme auf die einzige Zeichnung erläutert. Darin zeigt:

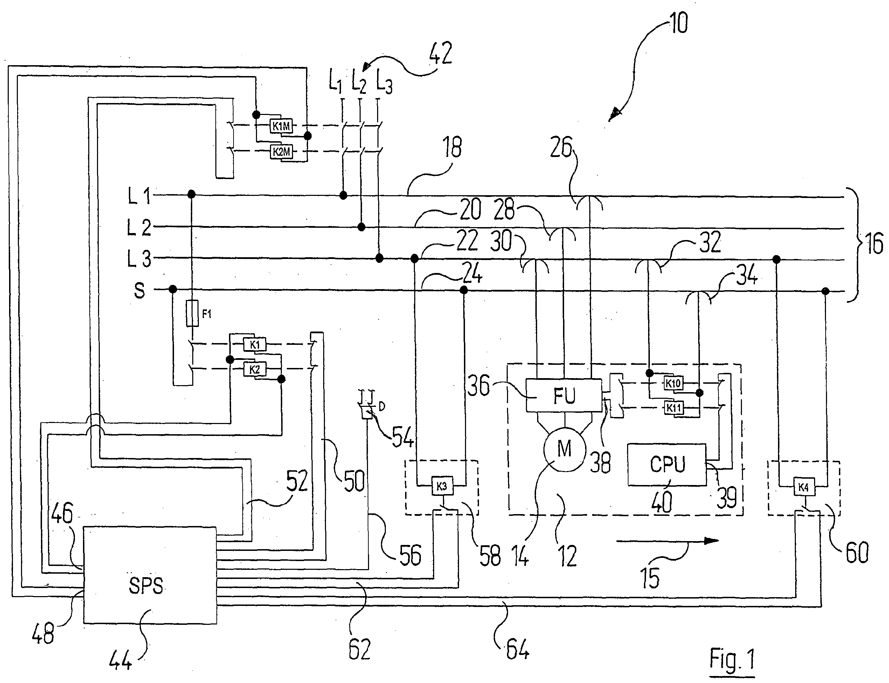

- Figur 1: eine schematische Darstellung der elektrischen Beschaltung einer Förderanlage.

### DETAILLIERTE BESCHREIBUNG EINES BEVORZUGTEN AUSFÜHRUNGSBEISPIELS

Figur 1 zeigt schematisch die elektrische Beschaltung einer nicht näher dargestellten Förderanlage 10 mit mindestens einer Fahreinheit 12, die einen Drehstrommotor 14 als mitgeführten, elektrischen Verbraucher umfasst und entlang eines Förderwegs 15 verfahrbar ist.

Zur elektrischen Versorgung des Drehstrommotors 14 ist entlang des Förderwegs 15 eine insgesamt mit 16 bezeichnete Stromschiene vorgesehen, welche im hier gezeigten Ausführungsbeispiel vier elektrisch leitfähige Schleifleitungen umfasst. Unter diesen befinden sich die drei Versorgungsschleifleitungen 18, 20 und 22, welche jeweils eine der drei Phasen L1, L2 und L3 einer 3-Phasen-Drehstromversorgung umfassen.

Ferner weist die Stromschiene 16 eine Sicherheitsschleifleitung 24 auf. Diese ist über eine Sicherung F1 und zwei ausgangsseitig (Schließerkontakte) in Reihe geschaltete Schütze K1, K2 als steuerbare Schalter mit der Versorgungsschleifleitung 18, d. h. der Phase L1 verbunden. Alternativ kann die Sicherheitsschleifleitung 24 auch in einer eigenen, von den Versorgungsschleifleitungen 18, 20, 22 separaten Stromschiene vorgesehen sein.

Nicht gezeigt ist eine Steuerschleifleitung, über welche beispielsweise CAN-BUS Steuersignale an die Fahreinheit 12 übermittelt werden. Ebenfalls nicht dargestellt sind Schleifleitungen zum Anschluss eines Nullleiters und eines PE-Schutzleiters.

Die Fahreinheit 12 weist zur Abnahme des Stromes von der Stromschiene 16 drei Versorgungsschleifkontakte 26, 28 und 30 auf, welche jeweils mit den Versorgungsleitungen 18, 20 und 22 in Kontakt stehen. Ferner weist die Fahreinheit 12 zwei Sicherheitsschleifkontakte 32 und 34 auf, welche an der Versorgungsschleifleitung 22 bzw. der Sicherheitsschleifleitung 24 anliegen.

Die Versorgungsschleifkontakte 26, 28 und 30 sind an der Fahreinheit 12 mit einem Frequenzumrichter 36 des elektrischen Antriebs verbunden, der wiederum mit dem Drehstrommotor 14 verbunden ist. Mit Hilfe des Frequenzumrichters 36 wird die Richtung und Leistung des Drehstrommotors 14 und damit die Bewegung der Fahreinheit 12 abhängig von den an die Fahreinheit 12 beispielsweise über die Steuerschleifleitung übermittelten Befehlen gesteuert.

Der Frequenzumrichter 36 verfügt ferner über einen sogenannten "Safe-Torque-Off"-Eingang (STO-Eingang) 38, der, wenn er geöffnet wird, den Frequenzumrichter 36 abschaltet und so sicherstellt, dass der Drehstrommotor 14 kein Drehmoment mehr verursacht. Dadurch wird eine gefährliche Eigenbewegung der Fahreinheit 12 sicher unterbunden. Der STO-Eingang 38 wird über zwei ausgangsseitig in Reihe geschaltete Schütze K10, K11 gesteuert, die eingangsseitig parallel geschaltet und mit den Sicherheitsschleifkontakten 32 und 34 verbunden sind. Schließlich öffnen ebenfalls in Reihe geschaltete Überwachungsausgänge (Öffnerkontakte) Schütze K10, K11 im angezogenen Zustand noch einen Eingang 39 einer Onboard-Logik 40 der Fahreinheit 12. Fällt also einer der Schütze K10, K11 nicht ab, so bleibt der Eingang 39 offen.

Zur Versorgung der Stromschiene 16 mit dem notwendigen Drehstrom sind die Versorgungsschleifleitungen 18, 20 und 22 jeweils über zwei ausgangsseitig in Reihe geschaltete Schütze K1M und K2M mit einer Stromversorgung 42 einer nicht näher dargestellten Hausinstallation verbunden.

In Figur 1 unten links ist eine fehlersichere, speicherprogrammierbare Steuerung (SPS) 44 gezeigt. Diese steuert über einen ersten Ausgang 46, jeweils parallel die Schütze K1 und K2 eingangseitig an. Ferner steuert die SPS 44 über einen zweiten Ausgang 48 ebenfalls parallel die Schütze K1M und K2M an.

Eingangsseitig sind an die SPS 44 eine mit Öffnerkontakten der Schützen K1 und K2 verbundene Rückmeldeleitung 50, eine mit Öffnerkontakten der Schütze K1M und K2M verbundene Rückmeldeleitung 52 sowie eine von einem Nothalt-Taster 54 kommende Leitung 56 angeschlossen.

Schließlich sind in der Figur 1 im vorliegenden Ausführungsbeispiel noch zwei stationär angeordnete, d.h. nicht von der Fahreinheit 12 mitgeführte, Überwachungsschaltungen 58 und 60 gezeigt, welche jeweils im Wesentlichen einen Schütz K3 bzw. K4 umfassen, der eingangseitig mit der Versorgungsschleifleitung 22 sowie der Sicherheitsschleifleitung 24 verbunden ist. Ausgangsseitig schließen die Schütze K3 bzw. K4 Rückmeldeleitungen 62 bzw. 64, welche ebenfalls an die fehlersichere SPS 44 angeschlossen sind.

Die Förderanlage 10 arbeitet wie folgt:
Im Normalbetrieb schließt die SPS 44 über die Schütze K1M und K2M die Versorgungsschleifleitungen 18, 20 und 22 der Stromschiene 16 an die Stromversorgung 42 der Hausinstallation an. Dabei werden auch die Schütze K1 und K2 angesteuert, so dass die Versorgungsschleifleitung 18 mit der Sicherheitsschleifleitung 24 verbunden ist, wodurch die Sicherheitsschleifleitung 24 aufgrund der Phasenverschiebung der unterschiedlichen Phasen L1, L2 und L3 gegenüber der Versorgungsschleifleitung 22, welche die Phase L3 führt, eine Spannung aufweist.

Diese Spannung zwischen der Versorgungsschleifleitung 22 und der Sicherheitsschleifleitung 24 wird von den Sicherheitsschleifkontakten 32 und 34 aufgenommen und an die Schütze K10 und K11 weitergegeben, so dass diese schalten, wodurch einerseits der Onboard-Logik 40 der Fahreinheit 12 der Normalbetrieb signalisiert wird und andererseits der Frequenzumrichter 36 über den STO-Eingang 38 freigegeben wird.

Mit Hilfe der Versorgungsschleifkontakte 26, 28 und 30 wird dann der Drehstrommotor 14 der Fahreinheit 12 entsprechend dem erforderlichen Bewegungsbedarf der Fahreinheit 12 betrieben.

Im Fall einer Notfall-Situation, bei welcher beispielsweise ein Bediener den Nothalt-Taster 54 betätigt, sorgt die fehlersichere SPS 44 zunächst dafür, dass die Schütze K1 und K2 abfallen, wodurch die Sicherheitsschleifleitung 24 von der Phase L1 getrennt wird.

Dadurch wird die Sicherheitsschleifleitung 24 gegenüber der Versorgungsschleifleitung 22 spannungsfrei, wodurch die Schütze K10, K11 an der Fahreinheit 12 abfallen. Diese sperren den STO-Eingang 38 des Frequenzumrichters 36, welcher den Drehstrommotor 14 abschaltet. Zusätzlich oder als Alternative kann dabei auch eine selbsteinfallende Bremse aktiviert werden, welche die Bewegung der Fahreinheit 12 mechanisch blockiert. Auf diese Weise wird eine gefährliche Eigenbewegung der Fahreinheit 12 in einer Nothalt-Situation sicher unterbunden. Bei Fahreinheiten, die weitere Antriebe zur Bewegung anderer mitgeführter Komponenten, wie beispielsweise einen in die Fahreinheit integrierten Hubförderer, haben, werden auch diese Antriebe deaktiviert, sodass jegliche gefahrbringende Bewegung der Fahreinheiten unterbunden wird.

Ferner erkennt die Onboard-Logik 40 der Fahreinheit 12 daran, dass der Eingang 39 geschlossen wird, die Nothalt-Situation und meldet dies beispielsweise über einen CAN-BUS an die fehlersichere SPS 44.

Sollte die Sicherheitsschleifleitung 24 nach Beendigung der Nothalt-Situation wieder mit der Versorgungsleitung 18 verbunden werden und somit wieder eine Spannung führen, kann in der Onboard-Logik 40 zudem vorgesehen sein, dass ein Anfahren der Fahreinheit 12 erst nach einer weiteren Quittierung seitens einer übergeordneten Zentralsteuerung oder händisch an der Fahreinheit 12 möglich ist.

Über die Überwachungsschaltungen 58 und 60 erkennt die SPS 44, ob die Sicherheitsschleifleitung 24 in der Nothalt-Situation auch tatsächlich spannungsfrei wurde. Denn auch die in den Überwachungsschaltungen angeordneten Schütze K3 und K4 fallen ab, sobald die Sicherheitsschleifleitung 24 spannungsfrei ist. Entsprechend werden die Rückmeldeleitungen 62 und 64 geöffnet. Ist dies beispielsweise aufgrund eines Kurzschlusses der Sicherheitsschleifleitung 24 mit der Versorgungsschleifleitung 18 nicht der Fall, so trennt die SPS 44 über die Schütze K1M und K2M die gesamte Stromschiene 16 von der Stromversorgung 42 der Hausinstallation.

Auf diese Weise führt die Versorgungsschleifleitung 22 mit Sicherheit keine Spannung mehr, sodass die Schütze K10 und K11 an der Fahreinheit 12 abfallen und die Bewegung blockieren.

Zusammenfassend wird also der Nothalt auch dann ausgeführt, wenn an einem der Teile der Sicherheitseinrichtung ein Fehler auftritt.

Als weitere oder alternative Überwachung der Spannungsfreiheit der Sicherheitsschleifleitung 24, kann die SPS 44 die Tatsache auswerten, dass bei einem Fehler gegebenenfalls die Meldung der Onboard-Logik 40 ausbleibt, welche die Nothalt-Situation signalisiert.

Da sowohl die Schütze K1 und K2 zur Verbindung der Versorgungsleitung 18 mit der Sicherheitsschleifleitung 24 als auch die stationär angeordneten Überwachungsschaltungen 58 und 60 mehrfach entlang der Stromschiene 16 angeordnet werden können, kann die Sicherheitsschleifleitung 24 abschnittsweise elektrisch getrennt vorgesehen werden, so dass der Nothalt auch nur für einzelne Abschnitte entlang des Förderwegs aktiviert werden kann. Erst bei einem größeren Problem müssten dann die über mehrere Abschnitte hinweg durchgängigen Versorgungsleitungen 18, 20 und 22 insgesamt von der Stromversorgung 42 getrennt werden.

Obwohl im gezeigten Ausführungsbeispiel nur eine einzelne Fahreinheit 12 gezeigt ist, ist für den Fachmann ohne weiteres ersichtlich, dass sich die beschriebene Sicherheitseinrichtung auf mehrere Fahreinheiten 12 erweitern lässt, die sich entlang des Förderwegs 15 an die Stromschiene 16 gekoppelt befinden.

Als Alternative zur gezeigten 3-Phasen-Drehstrom gespeisten Förderanlage 10, kann die erfindungsgemäße Sicherheitseinrichtung auch auf eine 1-phasige Stromversorgung angewandt werden. Dabei werden nur zwei Versorgungsschleifleitungen für die Phase L und den Nullleiter N sowie eine Sicherheitsschleifleitung benötigt, die über entsprechende Schütze mit der Phase L verbunden ist.

## Patentansprüche

1. Förderanlage (10) mit
a) mindestens einer entlang eines Förderweges (15) verfahrbaren Fahreinheit (12), die einen mitgeführten, elektrischen Verbraucher (14, 36) umfasst, und mit
b) einer entlang des Förderweges (15) angeordneten Stromschiene (16), die mindestens eine Versorgungsschleifleitung (18, 20, 22) umfasst, über welche die Fahreinheit (12) mit Strom versorgt wird, wobei
c) eine Sicherheitseinrichtung vorgesehen ist, die
- eine, insbesondere genau eine, Sicherheitsschleifleitung (24) umfasst, die im Normalbetrieb spannungsführend ist,
- eine erste Sicherheitsschaltung (K1, K2) umfasst, welche im Bedarfsfall die Sicherheitsschleifleitung (24) spannungsfrei schaltet, und
- ein Überwachungsmittel (58, 60; 40) umfasst, welches überwacht, ob die Sicherheitsschleifleitung (24) spannungsfrei ist, **dadurch gekennzeichnet, dass** die Sicherheitseinrichtung
- eine zweite Sicherheitsschaltung (K1M, K2M) umfasst, welche die mindestens eine Versorgungsschleifleitung (18, 20, 22) spannungsfrei schaltet, falls das Überwachungsmittel (58, 60; 40) erkennt, dass die Sicherheitsschleifleitung (24) nicht spannungsfrei ist, obwohl die erste Sicherheitsschaltung (K1, K2) die Sicherheitsschleifleitung (24) hätte spannungsfrei schalten sollen,
d) und dass die Fahreinheit (12)
- eine Überwachungsschaltung (32, 34, K10, K11), die erkennt, wenn an der Sicherheitsschleifleitung (24) keine Spannung mehr anliegt, und
- eine Stopp-Einrichtung (36, 38) mitführt, welche daraufhin den elektrischen Verbraucher (36, 14) der Fahreinheit (12) ausschaltet und/oder Bewegungen der Fahreinheit (12) blockiert.

2. Förderanlage nach Anspruch 1, **dadurch gekennzeichnet, dass** der elektrische Verbraucher (36, 14) ein elektrischer Antrieb ist, mit dessen Hilfe die Fahreinheit (12) entlang des Förderweges (15) verfahrbar ist und/oder mit dessen Hilfe andere Bewegungen realisiert werden.

3. Förderanlage nach einem der vorhergehenden Ansprüche, **dadurch gekennzeichnet, dass** das Überwachungsmittel (58, 60; 40) mindestens eine außerhalb der Fahreinheit stationär angeordnete Überwachungsschaltung (58, 60) umfasst.

4. Förderanlage nach einem der vorhergehenden Ansprüche, **dadurch gekennzeichnet, dass** das Überwachungsmittel (58, 60; 40) eine von der Fahreinheit mitgeführte Meldeschaltung (40) umfasst, die zumindest indirekt meldet, wenn an der Sicherheitsschleifleitung (24) keine Spannung mehr anliegt, wodurch, wenn die erste Schaltung (K1, K2) die Sicherheitsschleifleitung (24) hätte spannungsfrei schalten sollen, am Ausbleiben einer Meldung erkannt wird, dass die Sicherheitsschleifleitung (24) nicht spannungsfrei ist.

5. Förderanlage nach einem der vorhergehenden Ansprüche, **dadurch gekennzeichnet, dass** die erste Sicherheitsschaltung (K1, K2) zwei ausgangsseitig in Reihe geschaltete, steuerbare Schalter (K1, K2), insbesondere Schütze, umfasst, welche im Normalbetrieb die Sicherheitsschleifleitung (24) mit der mindestens einen Versorgungsschleifleitung (18) verbinden.

6. Förderanlage nach einem der vorhergehenden Ansprüche, **dadurch gekennzeichnet, dass** die zweite Sicherheitsschaltung (K1M, K2M) zwei ausgangsseitig in Reihe geschaltete, steuerbare Schalter (K1M, K2M), insbesondere Schütze, umfasst, welche im Normalbetrieb die mindestens eine Versorgungsschleifleitung (18, 20, 22) mit einer Stromversorgung (42) verbinden.

7. Förderanlage nach einem der vorhergehenden Ansprüche, **dadurch gekennzeichnet, dass** die Stopp-Einrichtung (36, 38) der Fahreinheit (12) zwei ausgangsseitig in Reihe geschaltete, steuerbare Schalter (K10, K11), insbesondere Schütze, umfasst, welche im Normalbetrieb einen Sperreingang (38) der Fahreinheit (12) schließen.

8. Förderanlage nach einem der vorhergehenden Ansprüche, **dadurch gekennzeichnet, dass** der elektrische Verbraucher (14, 36) mit einem 3-Phasen-Drehstrom (L1, L2, L3) arbeitet und die Stromschiene (16) drei Versorgungsschleifleitungen (18, 20, 22) umfasst, welche die drei Phasen (L1, L2, L3) des Drehstroms führen, und dass die Sicherheitsschleifleitung (24) im Normalbetrieb gegenüber zumindest einer der Versorgungsschleifleitungen (22) spannungsführend ist.

9. Förderanlage nach einem der vorhergehenden Ansprüche, **dadurch gekennzeichnet, dass** die Sicherheitseinrichtung einen Auslöseschalter (54) umfasst, über welchen der Bedarfsfall für die Sicherheitsfunktion aktiviert wird.

10. Förderanlage nach einem der vorhergehenden Ansprüche, **dadurch gekennzeichnet, dass** Teile der Sicherheitseinrichtung in einer fehlersicheren speicherprogrammierbaren Steuerung (44) realisiert sind.

11. Förderanlage nach einem der vorhergehenden Ansprüche, **dadurch gekennzeichnet, dass** die Sicherheitsschleifleitung (24) entlang des Förderweges (15) in Abschnitte unterteilt ist, die kleiner sind als Abschnitte der Versorgungsschleifleitung (18, 20, 22).

## Claims

1. A conveyor installation (10) having
a) at least one travel unit (12) that is displaceable along a conveying path (15) and that comprises a carried-along electrical consumer (14, 36), and having
b) a busbar (16) that is arranged along the conveying path (15) and that comprises at least one supply conductor line (18, 20, 22) by means of which the travel unit (12) is supplied with power,
wherein
c) a safety device is provided, that
- comprises a, particularly exactly one, safety conductor line (24) that is live during normal operation,
- comprises a first safety circuit (K1, K2), which, if necessary, de-energizes the safety conductor line (24),
and
- comprises a monitoring means (58, 60; 40), which monitors whether the safety conductor line (24) is de-energized,
**characterized in that**
- the safety device comprises a second safety circuit (K1M, K2M), which de-energizes the at least one supply conductor line (18, 20, 22) if the monitoring means (58, 60; 40) detects that the safety conductor line (24) is not de-energized even though the first safety circuit (K1, K2) should have de-energized the safety conductor line (24),
d) and **in that** the travel unit (12) carries along
- a monitoring circuit (32, 34, K10, K11) that detects when there is no more voltage applied to the safety conductor line (24), and
- a stop device (36, 38), which then switches off the electrical consumer (36, 14) of the travel unit (12) and/or blocks movements of the travel unit (12).

2. The conveyor installation according to Claim 1, **characterized in that** the electrical consumer (36, 14) is an electric drive that can be used to displace the travel unit (12) along the conveying path (15) and/or that is used to realize other movements.

3. The conveyor installation according one of the preceding Claims, **characterized in that** the monitoring means (58, 60; 40) comprises at least one monitoring circuit (58, 60) stationarily arranged outside the travel unit.

4. The conveyor installation according to one of the preceding Claims, **characterized in that** the monitoring means (58, 60; 40) comprises a reporting circuit (40) that is carried along by the travel unit and that reports at least indirectly when there is no more voltage applied to the safety conductor line (24), whereby, when the first circuit (K1, K2) should have de-energized the safety conductor line (24), in the absence of a report it is detected that the safety conductor line (24) is not de-energized.

5. The conveyor installation according to one of the preceding Claims, **characterized in that** the first safety circuit (K1, K2) comprises two controllable switches (K1, K2), particularly contactors, that are connected in series on the output side and that, during normal operation, connect the safety conductor line (24) to the at least one supply conductor line (18).

6. The conveyor installation according to one of the preceding Claims, **characterized in that** the second safety circuit (K1M, K2M) comprises two controllable switches (K1M, K2M), particularly contactors, that are connected in series on the output side and that, during normal operation, connect the at least one supply conductor line (18, 20, 22) to a power supply (42).

7. The conveyor installation according to one of the preceding Claims, **characterized in that** the stop device (36, 38) of the travel unit (12) comprises two controllable switches (K10, K11), particularly contactors, that are connected in series on the output side and that, during normal operation, close a disable input (38) of the transporting unit (12).

8. The conveyor installation according to one of the preceding Claims, **characterized in that** the electrical consumer (14, 36) operates with a 3-phase current (L1, L2, L3) and the busbar (16) comprises three supply conductor lines (18, 20, 22), which carry the three phases (L1, L2, L3) of the three-phase current, and **in that** the safety conductor line (24), during normal operation, is live with respect to at least one of the supply conductor lines (22).

9. The conveyor installation according to one of the preceding Claims, **characterized in that** the safety device comprises a release switch (54) by means of which the requirement for the safety function is activated.

10. The conveyor installation according to one of the preceding Claims, **characterized in that** parts of the safety device are realized in a failsafe storage-programmable logic controller (44).

11. The conveyor installation according to one of the preceding Claims, **characterized in that** the safety conductor line (24) is divided along the conveying path (15) into sections that are smaller than sections of the supply conductor line (18, 20, 22).

## Revendications

1. Installation de convoyage (10) comprenant
a) au moins une unité de déplacement (12), mobile le long d'un trajet de convoyage (15) et incluant un appareil consommateur électrique (14, 36) embarqué, et
b) un rail électrique (16), placé le long dudit trajet de convoyage (15) et incluant au moins une ligne de contact d'alimentation (18, 20, 22) par l'intermédiaire de laquelle ladite unité de déplacement (12) est alimentée en courant,
sachant
c) qu'il est prévu un dispositif de sécurité incluant
- une, en particulier exactement une ligne de contact de sécurité (24), conductrice de tension en mode fonctionnement normal,
- un premier circuit de sécurité (K1, K2) qui, en cas d'urgence, commute ladite ligne de contact de sécurité (24) sur une privation de tension,
et
un moyen de surveillance (58, 60 ; 40) qui surveille si ladite ligne de contact de sécurité (24) est exempte de tension,
**caractérisée par le fait que** le dispositif de sécurité inclut
- un second circuit de sécurité (K1M, K2M) qui commute la ligne de contact d'alimentation (18, 20, 22), à présence minimale, sur une privation de tension au cas où le moyen de surveillance (58, 60 ; 40) détecte que la ligne de contact de sécurité (24) n'est pas exempte de tension, alors que le premier circuit de sécurité (Kl , K2) aurait dû commuter ladite ligne de contact de sécurité (24) sur une privation de tension ;
d) et **par le fait que** l'unité de déplacement (12) charrie, avec elle,
- un circuit de surveillance (32, 34, K10, K11) qui détecte la situation dans laquelle plus aucune tension n'est appliquée à ladite la ligne de contact de sécurité (24), et
- un dispositif d'immobilisation (36, 38) qui, subséquemment, met l'appareil consommateur électrique (36, 14) de l'unité de déplacement (12) hors circuit, et/ou bloque des mouvements de ladite unité de déplacement (12).

2. Installation de convoyage selon la revendication 1, **caractérisée par le fait que** l'appareil consommateur électrique (36, 14) est un entraînement électrique à l'aide duquel l'unité de déplacement (12) peut être mue le long du trajet de convoyage (15), et/ou à l'aide duquel d'autres mouvements sont concrètement exécutés.

3. Installation de convoyage selon l'une des revendications précédentes, **caractérisée par le fait que** le moyen de surveillance (58, 60 ; 40) inclut au moins un circuit de surveillance (58, 60) occupant un emplacement fixe à l'extérieur de l'unité de déplacement.

4. Installation de convoyage selon l'une des revendications précédentes, **caractérisée par le fait que** le moyen de surveillance (58, 60 ; 40) inclut un circuit de signalisation (40) que l'unité de déplacement (12) charrie avec elle et qui avertit, au moins indirectement, lorsque plus aucune tension n'est appliquée à la ligne de contact de sécurité (24), de sorte que, lorsque le premier circuit (K1, K2) aurait dû commuter ladite ligne de contact de sécurité (24) sur une privation de tension, l'absence d'un signal permet de repérer que ladite ligne de contact de sécurité (24) n'est pas exempte de tension.

5. Installation de convoyage selon l'une des revendications précédentes, **caractérisée par le fait que** le premier circuit de sécurité (K1, K2) inclut deux commutateurs pilotables (K1, K2) branchés en série côté sortie, en particulier des contacteurs qui raccordent, en mode fonctionnement normal, la ligne de contact de sécurité (24) à la ligne de contact d'alimentation (18) à présence minimale.

6. Installation de convoyage selon l'une des revendications précédentes, **caractérisée par le fait que** le second circuit de sécurité (K1M, K2M) inclut deux commutateurs pilotables (K1M, K2M) branchés en série côté sortie, en particulier des contacteurs qui, en mode fonctionnement normal, raccordent la ligne de contact d'alimentation (18, 20, 22), à présence minimale, à une alimentation en courant (42).

7. Installation de convoyage selon l'une des revendications précédentes, **caractérisée par le fait que** le dispositif d'immobilisation (36, 38) de l'unité de déplacement (12) inclut deux commutateurs pilotables (K10, K11) branchés en série côté sortie, en particulier des contacteurs qui, en mode fonctionnement normal, ferment une entrée de blocage (38) de ladite unité de déplacement (12).

8. Installation de convoyage selon l'une des revendications précédentes, **caractérisée par le fait que** l'appareil consommateur électrique (14, 36) fonctionne avec un courant triphasé (L1, L2, L3), et le rail électrique (16) compte trois lignes de contact d'alimentation (18, 20, 22) conduisant les trois phases (L1, L2, L3) dudit courant triphasé ; et **par le fait que** la ligne de contact de sécurité (24) est conductrice de tension, en mode fonctionnement normal, par rapport à au moins l'une (22) desdites lignes de contact d'alimentation (18, 20, 22).

9. Installation de convoyage selon l'une des revendications précédentes, **caractérisée par le fait que** le dispositif de sécurité inclut un interrupteur de déclenchement (54), par l'intermédiaire duquel est activé le cas d'urgence dédié à la fonction de sécurité.

10. Installation de convoyage selon l'une des revendications précédentes, **caractérisée par le fait que** des parties du dispositif de sécurité sont matérialisées dans une commande logique programmable (44) exempte d'erreurs.

11. Installation de convoyage selon l'une des revendications précédentes, **caractérisée par le fait que** la ligne de contact de sécurité (24) est scindée, le long du trajet de convoyage (15), en des segments plus petits que des segments de la ligne de contact d'alimentation (18, 20, 22).
